# EUROPEAN PATENT APPLICATION

(11) **EP 1 536 505 A2**
(43) Date of publication of application: **01.06.2005**
(21) Application number: 04024971.6
(22) Date of filing: 20.10.2004
(51) Int. Cl.: H01M 8/12

(54) **Fuel electrode for solid oxide fuel cell and solid oxide fuel cell using the same**

(30) Priority: 25.11.2003 JP 2003394185
(71) Applicant: NISSAN MOTOR CO., LTD., Yokohama-shi Kanagawa-ken (JP)
(72) Inventor: Song, Dong, Yokohama-shi Kanagawa-ken (JP); Hatano, Masaharu, Yokohama-shi Kanagawa-ken (JP)
(74) Representative: Hoefer & Partner

(57) **Abstract**

A fuel electrode for a solid oxide fuel cell of the present invention includes a metal; and an oxide with oxygen ion conductivity. In the fuel electrode, the oxide is porous, and a concentration of the metal is reduced from a front surface of the fuel electrode toward an electrolyte layer. By this structure, the fuel electrode is capable of increasing the reaction rate of an electrochemical reaction and increasing cell output by constructing the electron and ion-conducting paths and by increasing the contact between the Ni layer and the oxide layer.

## Description

### BACKGROUND OF THE INVENTION

### 1. Field of the Invention

The present invention relates to a fuel electrode for a solid oxide fuel cell which is suitably used as a fuel electrode of a solid oxide fuel cell including a solid oxide electrolyte, and relates to a solid oxide fuel cell using such a fuel electrode.

### 2. Description of the Related Art

A fuel cell has attracted much notice as a clean energy source which not only realizes high power-generation efficiency but also generates little toxic exhaust gas and thus is friendly to the earth. A fuel cell has gone into a practical use as a power source for a movable object such as an automobile.

Among various types of fuel cells, a solid oxide fuel cell (SOFC) uses, as an electrolyte, a solid oxide material with oxygen ion conductivity, such as stabilized zirconia or ceria solid solution (for example, samarium doped ceria). In the SOFC, an air electrode layer is stacked on one side of the electrolyte, and a fuel electrode layer is stacked on the other side, which forms a power-generating portion. The air and fuel electrode layers have gas permeability. In the power-generating portion, fuel gas such as hydrogen or hydrocarbon and oxidant gas such as air are supplied to the fuel electrode side and to the air electrode side, respectively, to generate electricity. The foregoing solid electrolyte having gas impermeability serves as a barrier at this time.

Generally, a constituent of the fuel electrode used in such a SOFC is composed of a mixture of nickel (Ni) and an oxide with oxygen ion conductivity. In order to enhance electrode reactivity of the SOFC, it is necessary to construct an electron-conducting path made of Ni and an ion-conducting path made of an oxygen ion conductor in the fuel electrode. Generally, the fuel electrode is formed by mixing Ni powder and oxide powder by means of a mechanical method and applying the mixture on the electrolyte.

However, with such a method, it is difficult to disperse the material powder uniformly, and it is very difficult to form the electron and ion-conducting paths within the fuel electrode.

As a method of manufacturing the fuel electrode other than the aforementioned mechanical mixing, Japanese Patent Application Laid-Open No. H6-89723 discloses the following technology. First, a solution of a salt of a metal acting as an electrode, such as Ni, is prepared, and powder of a porous substance is immersed in the solution. Subsequently, this powder is then treated with heat, and the metal is thereby supported on the surface of the porous substance. The powder is then molded and baked into a fuel electrode.

### SUMMARY OF THE INVENTION

However, in the electrode manufacturing method described in the aforementioned Japanese Patent Application Laid-Open No. H6-89723, Ni is supported on the entire surface of the porous substance. When the porous substance is an oxygen ion conductive substance, the formation of the ion-conducting path is prevented by the coating of Ni, which causes a problem that the reaction interfaces within the electrode are reduced.

The present invention was made in the light of the above problem of the conventional SOFC fuel electrode. The object of the present invention is to provide an SOFC fuel electrode capable of increasing the reaction rate of an electrochemical reaction and increasing cell output by constructing the electron and ion-conducting paths and by increasing the contact between the Ni layer and the oxide layer and is to provide an SOFC using such a fuel electrode.

The first aspect of the present invention provides a fuel electrode for a solid oxide fuel cell comprising: a metal; and an oxide with oxygen ion conductivity, wherein the oxide is porous, and a concentration of the metal is reduced from a front surface of the fuel electrode toward an electrolyte layer.

The second aspect of the present invention provides a solid oxide fuel cell comprising: an electrolyte layer including a solid oxide; an air electrode formed on one side of the electrolyte layer; and a fuel electrode formed on the other side of the electrolyte layer, the fuel electrode comprising: a metal; and an oxide with oxygen ion conductivity, wherein the oxide is porous, and a concentration of the metal is reduced from a front surface of the fuel electrode toward the electrolyte layer.

### BRIEF DESCRIPTION OF THE DRAWINGS

The invention will now be described with reference to the accompanying drawings wherein;
FIG. 1 is a schematic view showing an example of a stacking structure of a fuel electrode of the present invention;
FIG. 2 is a schematic view showing another example of the stacking structure of the fuel electrode of the present invention;
FIG. 3 is a schematic view showing a cell fabricated in Examples and Comparative Examples; and
FIG. 4 is a table showing constitutions and test results of SOFCs of Examples and Comparative Examples.

### DETAILED DESCRIPTION OF THE PREFERRED EMBODIMENT

Hereinafter, description will be made of embodiments of the present invention with reference to the drawings.

A fuel electrode for a SOFC of the present invention is made of an oxide with oxygen ion conductivity and a metal such as nickel and adopts a multilayer structure and a gradient density structure. Specifically, the fuel electrode of the present invention is configured so that metal concentration is reduced from the front surface side toward the electrolyte side surface.

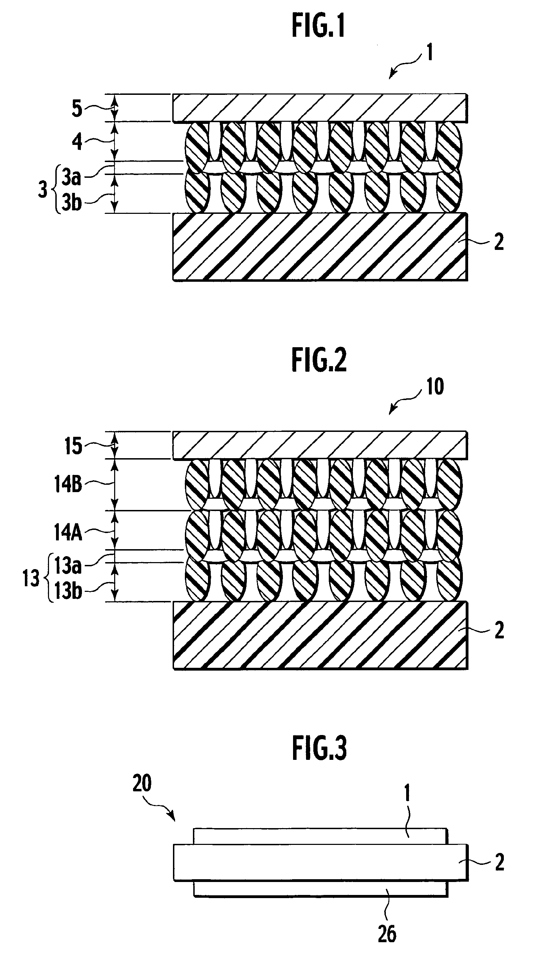

Specifically, as shown in FIG. 1, a fuel electrode 1 of the present invention includes a stacking structure composed of at least three layers of an electrolyte-side layer 3, an outermost layer 5, and an intermediate layer 4 located therebetween. The outermost layer 5, which is located on the front surface side opposite to the electrolyte, includes the metal but not the oxide having oxygen ion conductivity. The intermediate layer 4 and the electrolyte-side layer 3 include both the oxide and metal. Especially in a part of the electrolyte-side layer 3 which is in direct contact with the electrolyte layer 2, desirably, an oxide layer 3b which does not include the metal and is made of substantially only the oxide is formed.

With such a structure, the electron-conducting path of the metal and the ion-conducting path of the oxide can be constructed, thus increasing the electrode reaction efficiency and improving battery performance. In addition, since the metal within the fuel electrode 1 is not in direct contact with the electrolyte, separation of the fuel electrode due to a difference in thermal expansion coefficient between the metal and the electrolyte is less likely to be caused, and it is possible to obtain stable battery performance for long periods.

The aforementioned metal may be nickel (Ni), copper (Cu), platinum (Pt), gold (Au), ruthenium (Ru), and the like and, Ni is preferred in terms of costs.

On the other hand, for the oxide with oxygen ion conductivity, it is possible to use one of or a mixture of two or more of samarium doped ceria (SDC), yttria stabilized zirconia (YSZ), cerium-gallium composite oxide (CGO), ceria (CeO₂), lanthanum gallate based oxide, and the like.

The fuel electrode of such a multilayer structure can be prepared by applying a solution including a metal compound such as a Ni compound to a porous body made of the aforementioned oxide by means of a method such as spraying, dip-coating, and spin-coating. The depth to which the metal penetrates the porous body of the oxide can be adjusted by controlling viscosity of the application solution.

When nickel is used as the metal of the fuel electrode, a solution of an inorganic salt such as nickel nitrate or nickel chloride can be used as the application solution. In addition, it is possible to use a solution of an organic acid salt such as a nickel plating solution or a NiO coating agent. The viscosity of the above solution is adjusted by, for example, adding a binder such as ethyl cellulose.

Specifically, as shown in FIG. 1, first, a first layer made of a porous oxide is formed on the electrolyte layer 2, and then a metal compound solution with comparatively high viscosity is applied to the first layer. The solution penetrates pores of the oxide at low speed and does not reach the electrolyte layer 2 as a substrate. The electrolyte-side layer 3 can be thus obtained in which the oxide layer 3b not including the metal is formed in the lower part of the electrolyte-side layer 3 and a mix layer 3a made of the metal and oxide is formed in the upper part thereof.

Subsequently, a second layer made of a porous oxide is similarly formed on the electrolyte-side layer 3, and the metal compound solution with comparatively low viscosity is then applied to the second layer. The solution completely penetrates deep into pores of the second layer and comes into contact with the upper part of the first layer where the metal compound solution is infiltrated, thus forming the intermediate layer 4 where the oxide and metal are mixed. The present invention is characterized in that the metal content of the intermediate layer 4 is larger than the metal content of the electrolyte-side layer 3.

On the intermediate layer 4 with the metal compound solution infiltrated, a third layer which is a metal layer not including the oxide is formed of a metal compound solution with still higher viscosity as the outermost layer 5, thus completing the fuel electrode 1 of a three-layer structure.

In the fuel electrode 1 of the present invention, it is preferred that the content of the metal within the electrolyte-side layer 3 ranges from 10 to 50% by weight of the total composition of the electrolyte-side layer 3. When the content of the metal is less than 10% by weight, three phase interfaces within the electrolyte-side layer 3 are reduced, and the reaction efficiency is lowered. When the content of the metal is more than 50% by weight, the metal comes into contact with the electrolyte 2, causing separation.

It is preferred that the content of the metal within the intermediate layer 4 ranges from 50 to 90% by weight of the total composition of the intermediate layer 4. When the content of the metal is less than 50% by weight, three phase interfaces within the intermediate layer 4 are reduced. Accordingly, the reaction efficiency may be lowered, or the electron-conducting path may not be formed. When the content of the metal is more than 90% by weight, the amount of the oxide becomes small, and the three phase interfaces are reduced, thus lowering the reaction efficiency.

In the fuel electrode 1 of the present invention, it is preferred that the porosity of the outermost layer 5 ranges from 30 to 60%. When the porosity is less than 30%, the fuel gas cannot move into the outermost layer 5, and the reaction efficiency is lowered. When the porosity is more than 60%, too many pores within the outermost layer 5 lower the strength of the outermost layer 5. The porosity in this specification designates a ratio of the total volume of pores existing in each layer (the electrolyte-side layer, intermediate layer, and outermost layer) to the total volume of the layer.

It is preferred that the porosities of the electrolyte-side layer 3 and intermediate layer 4 range from 30 to 70%. When the porosities are less than 30%, the fuel gas cannot move into the electrolyte-side layer 3 and intermediate layer 4, and the reaction efficiency is lowered. When the porosities are more than 70%, too many pores within the electrolyte-side layer 3 and intermediate layer 4 lower the strength of the electrolyte-side layer 3 and intermediate layer 4, respectively.

In the fuel electrode 1 of the present invention, it is preferred that a thickness t1 of the oxide layer 3b of the electrolyte-side layer 3 ranges from 1 µm to 10 µm. When the thickness t1 is smaller than 1 µm, it becomes difficult to control so that the metal included in the mix layer 3a does not come into contact with the electrolyte layer 2. On the other hand, when the thickness t1 is larger than 10 µm, the IR loss due to the thickness of the oxide layer 3b could increase.

It is preferred that a diameter d1 of the pores within the oxide layer 3b of the electrolyte-side layer 3 ranges from 0.01 µm to 0.5 µm. When the diameter d1 is smaller than 0.01 µm, the metal compound solution is less likely to penetrate the pores even if the viscosity is adjusted. On the other hand, when the diameter d1 is larger than 0.5 µm, the metal compound solution could penetrate into the electrolyte layer 2, and the metal is highly likely to come into contact with the electrolyte layer 2.

It is preferred that a ratio d1/t1 of the pore diameter to the thickness ranges from 0.002 to 0.5. When the ratio d1/t1 is lower than 0.002, the metal compound solution is less likely to penetrate the pores, and when the ratio d1/t1 is higher than 0.5, the solution could penetrate into the electrolyte as the substrate, and the metal is highly likely to come into contact with the electrolyte layer 2, which is not preferred.

On the other hand, it is preferred that a thickness t2 of the intermediate layer 4 ranges from 5 µm to 10 µm. When the thickness t2 is smaller than 5 µm, the contact area between the oxide and metal becomes small, and the reaction field could be reduced. When the thickness t2 is larger than 10 µm, not only the IR loss due to the thickness of the oxide is increased, but also it becomes difficult to infiltrate the metal compound solution completely, and the metal within the intermediate layer 4 may not be connected with the metal within the electrolyte-side layer 3.

It is preferred that a diameter d2 of the pores of the oxide within the intermediate layer 4 ranges from 0.5 µm to 3 µm. When the diameter d2 is smaller than 0.5 µm, the metal compound solution is less likely to penetrate the pores. On the other hand, when the diameter d2 is larger than 3 µm, much of the metal gathers in the pores of the oxide to form solid metal masses. There is a tendency that the contact between the oxide and the metal is reduced and three phase interfaces are thus reduced.

It is preferred that a ratio d2/t2 of the pore diameter to the thickness of the intermediate layer 4 ranges from 0.005 to 0.6. When the above ratio d2/t2 is lower than 0.005, the application solution of the metal compound is less likely to penetrate the pores. On the other hand, when the ratio d2/t2 is higher than 0.6, there is a tendency that the metal within the intermediate layer is insufficiently connected to the metal within the surface layer and the electrical conductivity is reduced.

The fuel electrode of the present invention is not limited to the aforementioned three-layer structure and may have a four-layer structure as shown in FIG. 2. When the fuel electrode is designed to have a four-layer structure, the metal concentration is similarly reduced from the front surface side of the fuel electrode toward the electrolyte-side surface thereof. Specifically, a fuel electrode 10 includes a stacking structure composed of four layers of at least an electrolyte-side layer 13, an outermost layer 15, and first and second intermediate layers 14A and 14B located therebetween. The outermost layer 15, which is located on the front surface side opposite to the electrolyte, includes the metal but not the oxide, and the first and second intermediate layers 14A and 14B and the electrolyte-side layer 3 include both the oxide and metal. Especially in the electrolyte-side layer 3, desirably, an oxide layer 13b which does not include the metal and is made of substantially only the oxide is formed in a part which is in direct contact with the electrolyte layer 2, and a mix layer 13a in which the metal and oxide are mixed is formed in a part in contact with the first intermediate layer 14A.

With such a structure, the electron-conducting path of the metal and the ion-conducting path of the oxide can be constructed, thus increasing the electrode reaction efficiency and improving battery performance. In addition, compared to the three-layer structure, part in which the metal and oxide are mixed is increased, and the three-phase interfaces are increased, thus improving the reaction efficiency.

The fuel electrode 10 is manufactured, similarly to the aforementioned method of manufacturing the fuel electrode 1, by repeating formation of the porous body of the oxide and application and drying of the metal compound.

Next, a specific description is given of the present invention based on Examples. The present invention is not limited to these Examples.

### (Example 1)

As shown in FIG. 3, the electrolyte layer 2 made of LSGM (La_{0.9}Sr_{0.1}Ga_{0.83}Mg_{0.17}O₃) with a thickness of 300 µm was used as the substrate. Air electrode slurry containing SSC (Sm_{0.5}Sr_{0.5}CoO₂) was applied on one side of the electrolyte substrate (electrolyte layer) 2, dried, and then baked in air at 1100 °C for two hours, thus forming an air electrode 26.

Subsequently, on the other side of the electrolyte substrate 2, electrode paste of SDC (Sm_{0.2}Ce_{0.8}O₂) including polymer beads with a predetermined diameter mixed as a pore forming agent was applied by screen printing, dried, and then burned at 200 °C, thus forming the first layer made of the porous oxide.

Thereafter, a Ni coating agent was adjusted to a predetermined concentration and then infiltrated into the pores within the SDC layer by dip coating. The obtained material was dried at 250 °C and then baked at 100 °C, thus obtaining the electrolyte-side layer 3 including the oxide layer 3b on the side of the electrolyte substrate 2.

Electrode paste of SDC including polymer beads with different diameter from that of the aforementioned paste was applied on the obtained electrolyte-side layer 3 similarly to the first layer, dried, and then burned, thus forming the second layer.

Subsequently, a Ni coating agent different from the aforementioned Ni coating agent in density and viscosity was similarly applied to be infiltrated completely into the pores within the second layer, thus obtaining the intermediate layer 4.

Furthermore, on the intermediate layer 4, Ni paste was applied by printing, and then baked at 1300 °C for two hours to form the outermost layer 5 not including the oxide, thus obtaining an SOFC 20.

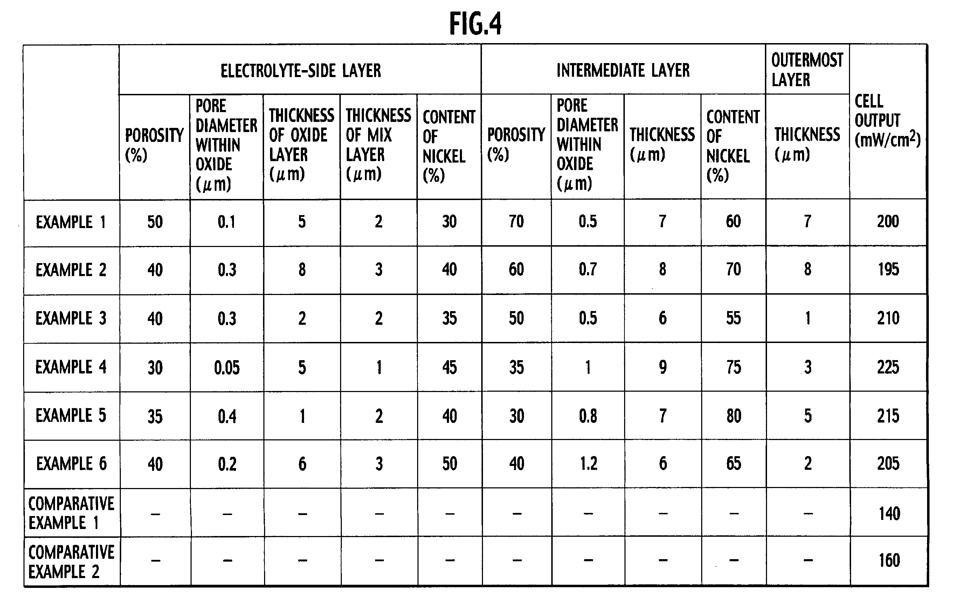

The thus obtained SOFC was tested in terms of output performance. At this time, power generation test was performed at 600 °C while 5% humidified H₂ was supplied to the fuel electrode side and air was supplied to the air electrode side. These results are shown in FIG. 4 with specifications of each layer of the fuel electrode.

### (Example 2)

A fuel electrode of this Example was formed to obtain the SOFC 20 by repeating similar operations to those of the above Example 1 except the following operations: when the porous oxide layers, which were the first and second layers, were formed on one side of the electrolyte substrate 2 with the air electrode 26, SDC electrode paste including polymer beads with different diameter at a different content was used, and an aqueous solution of a nitrate salt of Ni, instead of the Ni coating agent, was applied by spraying to be infiltrated into the pores.

For the thus obtained SOFC, the same performance test as that of Example 1 was performed, and the results thereof are shown in FIG. 4 together with the specification of each layer of the fuel electrode.

### (Examples 3 to 6)

SOFCs of Examples 3 to 6 were fabricated by the method similar to that of Example 1. The porosity of each Example was adjusted by changing the amount and diameter of added polymer beads. The thickness of each layer was adjusted by changing the amount of applied solution.

For the thus obtained SOFCs, the same performance test as that of Example 1 was performed, and the results thereof are shown in FIG. 4 together with the specification of each layer of the fuel electrode.

### (Comparative Example 1)

After the air electrode 26 was formed on one side of the aforementioned electrolyte substrate 2 similarly to that of Example 1, slurry with Ni particles and SDC particles mechanically mixed at a volume ratio of 7/3 and dispersed was applied on the other side of the electrolyte substrate 2, and then dried. Thus obtained material was baked in air at 1200 °C for two hours to form a fuel electrode of a monolayer structure, thus obtaining the SOFC 20 of Comparative Example 1.

For the thus obtained SOFC, the same performance test as that of Example 1 was performed, and the results thereof are shown in FIG. 4 together with the specification of each layer of the fuel electrode.

### (Comparative Example 2)

The fuel electrode was formed as follows on one side of the electrolyte substrate 2 with the air electrode formed on the other side similarly to the Comparative Example 1. First, SDC powder was entirely immersed in an aqueous solution of nickel nitrate which was prepared by dissolving nickel nitrate with distilled water at a predetermined concentration, and then water was evaporated at room temperature. After being dried sufficiently, the obtained material was exposed to the atmosphere at 100 °C for 24 hours or more to be further dried, and then treated with heat at 600 °C for 12 hours, thus attaching the Ni compound to the inside of each pore of the SDC powder. Subsequently, the prepared SDC powder including Ni was press-molded and then baked at 1200 °C to fabricate the fuel electrode of a monolayer structure, thus obtaining the SOFC 20 of Comparative Example 2.

For the thus obtained SOFC, the same performance test as that of Example 1 was performed, and the results thereof are shown in FIG. 4 together with the specification of each layer of the fuel electrode.

As apparent from the results of FIG. 4, it was confirmed that the SOFCs of Examples 1 to 6 could provide cell output extremely higher than that of the SOFCs of Comparative Examples 1 and 2.

The entire content of a Japanese Patent Application No. P2003-394185 with a filing date of November 25, 2003 is herein incorporated by reference.

Although the invention has been described above by reference to certain embodiments of the invention, the invention is not limited to the embodiments described above will occur to these skilled in the art, in light of the teachings. The scope of the invention is defined with reference to the following claims.

## Claims

1. A fuel electrode for a solid oxide fuel cell, comprising:
a metal; and
an oxide with oxygen ion conductivity,
wherein the oxide is porous, and a concentration of the metal is reduced from a front surface of the fuel electrode (1) toward an electrolyte layer (2).

2. A fuel electrode according to claim 1,
wherein the metal is at least one of nickel, copper, platinum, gold, and ruthenium.

3. A fuel electrode according to claims 1 or 2,
wherein the oxide is at least one of samarium doped ceria, yttria stabilized zirconia, cerium-gallium composite oxide, ceria, and lanthanum gallate based oxide.

4. A fuel electrode according to any of claims 1 through 3,
wherein the fuel electrode (1) includes: an electrolyte-side layer (3) located on the side of the electrolyte layer (2), the electrolyte-side layer (3) including the oxide and the metal; an outermost layer (5) located on the side of the front surface, the outermost layer (5) including the metal and excluding the oxide; and an intermediate layer (4) located between the electrolyte-side layer (3) and the outermost layer (5), the intermediate layer (4) including the oxide and the metal, and
an oxide layer (3b) without the metal is formed in the electrolyte-side layer (3) and the oxide layer (3b) is positioned adjacent to the electrolyte layer (2).

5. A fuel electrode according to claim 4,
wherein a thickness t1 of the oxide layer (3b) in the electrolyte-side layer (3) ranges from 1 µm to 10 µm,
a pore diameter d1 in the oxide within the electrolyte-side layer (3) ranges from 0.01 µm to 0.5 µm, and
a ratio d1/t1 of the pore diameter to the thickness ranges from 0.002 to 0.5.

6. A fuel electrode according to claims 4 or 5,
wherein a thickness t2 of the intermediate layer (4) ranges from 5 µm to 10 µm,
a pore diameter d2 in the oxide within the intermediate layer (4) ranges from 0.5 µm to 3 µm, and
a ratio d2/t2 of the pore diameter to the thickness ranges from 0.005 to 0.6.

7. A fuel electrode according to any of claims 4 through 6,
wherein a ratio of a total volume of pores existing within the electrolyte-side layer (3) to a total volume of the electrolyte-side layer (3) ranges from 30 to 70%, and
a ratio of a total volume of pores existing within the intermediate layer (4) to a total volume of the intermediate layer (4) ranges from 30 to 70%.

8. A fuel electrode according to any of claims 4 through 7,
wherein a content of the metal within the electrolyte-side layer (3) ranges from 10 to 50% by weight of total constituents of the electrolyte-side layer (3).

9. A fuel electrode according to any of claims 4 through 8,
wherein a content of the metal within the intermediate layer (4) ranges from 50 to 90% by weight of total constituents of the intermediate layer (4).

10. A solid oxide fuel cell, comprising:
an electrolyte layer (2) including a solid oxide;
an air electrode (26) formed on one side of the electrolyte layer (2); and
a fuel electrode (1) formed on the other side of the electrolyte layer (2),
the fuel electrode (1) comprising:
a metal; and
an oxide with oxygen ion conductivity,
wherein the oxide is porous, and a concentration of the metal is reduced from a front surface of the fuel electrode (1) toward the electrolyte layer (2).
